Europäisches Patentamt

European Patent Office

Office européen des brevets

(19)

(11) Veröffentlichungsnummer: **0 305 740**
**A2**

(12) **EUROPÄISCHE PATENTANMELDUNG**

(21) Anmeldenummer: **88112289.9**

(22) Anmeldetag: **29.07.88**

(51) Int. Cl.⁴: **B29C 49/46**

(30) Priorität: **02.09.87 DE 3729221**

(43) Veröffentlichungstag der Anmeldung:
**08.03.89 Patentblatt 89/10**

(84) Benannte Vertragsstaaten:
**ES FR GB IT**

(71) Anmelder: **MESSER GRIESHEIM GMBH**
**Hanauer Landstrasse 330**
**D-6000 Frankfurt/Main 1(DE)**

(72) Erfinder: **Eschwey, Manfred, Dr.**
**Kreuzbergstrasse 7 H**
**D-4000 Düsseldorf 31(DE)**
Erfinder: **van Bonn, Rolf**
**Salzachstrasse 5**
**D-4100 Duisburg 29(DE)**
Erfinder: **Neumann, Horst**
**Andreas-Faust-Strasse 11**
**D-6233 Kelkheim(DE)**

(54) **Verfahren zum Blasformen und Fluorieren von Hohlkörpern aus thermoplastischem Material.**

(57) Durch Blasformen hergestellte Hohlkörper aus thermoplastischem Kunststoff können mit einer fluorierten Sperrschicht auf der inneren Oberfläche versehen werden. Diese Sperrschicht verhindert beispielsweise eine übermäßige Permeation von Kraftstoff aus Kraftstoffbehältern für Automobile. Um die Sperrschicht aufzubringen, läßt man ein fluorhaltiges Reaktionsgas auf den noch heißen, an der Innenwand der Blasform anliegenden Vorformling einwirken. Zwecks Verbesserung der Sperrwirkung und Verringerung des hierfür erforderlichen Fluors verwendet man ein Reaktionsgas aus 0,1 bis 2 Vol.% Fluor und 0,05 bis 5 Vol.% Sauerstoff, Rest Stickstoff, bei einer Temperatur der Hohlkörperinnenfläche von 50 bis 130° C.

*Fig. 2*

EP 0 305 740 A2

## Verfahren zum Blasformen und Fluorieren von Hohlkörpern aus thermoplastischem Material

Die Erfindung betrifft ein Verfahren zum Blasformen und Fluorieren von Hohlkörpern aus thermoplastischem Material nach dem Oberbegriff des Anspruches 1.

Die durch Gasphasenfluorierung von technischen Polymeren auf diesen aufgebrachte Sperrschicht dient dazu, die Permeation von Lösungsmitteln, Treibstoffen und deren Zubereitungen durch die Polymere zu verringern. Ein bedeutendes Anwendungsgebiet ist die Fluorierung der inneren Oberflächen von Kraftstoffbehältern für Automobile. Da Fluor sehr giftig ist, erfordern die Fluorierung und die Entsorgung des nicht umgesetzten Fluors hohe Sorgfalt.

Der Erfindung liegt die Aufgabe zugrunde, ein Verfahren zur Gasphasenfluorierung zu schaffen, welches im Vergleich zu bekannten Verfahren weniger Fluor erfordert und gleichzeitig die Sperrwirkung der fluorierten Oberfläche verbessert.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Vorteilhafte Weiterbildungen sind in den Unteransprüchen angegeben.

Die obere Grenze des zulässigen Sauerstoffgehaltes hängt darüber hinaus vom Strömungszustand des Behandlungsgases ab. Bei überwiegend turbulenter Strömung sollte die Obergrenze von 1 Vol% $O_2$ nicht überschritten werden.

Nach dem Stand der Technik gilt die Anwesenheit von Sauerstoff als schädlich für das Sperrverhalten der durch Gasphasenfluorierung erzeugten Grenzschicht. So wird beispielsweise in der DE-PS 24 01 948, welche ein Verfahren mit fluorhaltigem Blasgas betrifft, darauf hingewiesen, wie wichtig es sei, daß das verwendete Blasgas neben Fluor keine merklichen Sauerstoffmengen enthält. Durch Inertisierung der zu behandelnden Fläche mit Inertgas, insbesondere Stickstoff und Kohlendioxid, versucht man diesem schädlichen Einfluß des Sauerstoffs zu begegnen. Vermutlich führt der vor dem eigentlichen Fluorierungsschritt vorhandene Sauerstoff bei Temperaturen von ca. 80 bis 140° C, wie sie bei technischen Fluorierungsprozessen oft angewandt werden, zu einer Vorbelegung der Polymeroberfläche mit elektronegativen Gruppen (Peroxide, Carbonylverbindungen), was im Endeffekt als Konkurrenzreaktion zur Fluorierung zu deuten ist und zu einer deutlichen Erhöhung der Permeationsraten führt. Es ist daher überraschend, daß die Anwesenheit von Sauerstoff in dem gemäß der Erfindung bestimmten Konzentrationsbereich sich günstig auf die Sperrschichteigenschaften auswirkt. Dieser günstige Effekt ist vermutlich eine Folge der drastisch verkleinerten spezifischen Oberfläche des Polymers, die durch rasterelektronenmikroskopische Aufnahmen nachgewiesen wurde.

Hierzu sind die Fig.1 bis 4 mit derartigen Aufnahmen beigefügt, welche die Oberflächen von HDPE zeigen, welche bei 120° C bei 10 bar absolut ohne und mit Sauerstoffzusatz fluoriert wurden. Die Aufnahmen zeigen im einzelnen:

Fig.1 Reaktionsgas aus 1 Vol% Fluor, Rest Stickstoff;
Vergrößerung 2000:1,

Fig.2 Reaktionsgas aus 1 Vol% Fluor, 0,2 Vol% Sauerstoff,
Rest Stickstoff;
Vergrößerung 2000:1,

Fig.3 Wie Fig.l, jedoch Vergrößerung 10000:1,

Fig.4 Wie Fig.2, jedoch Vergrößerung 10000:1.

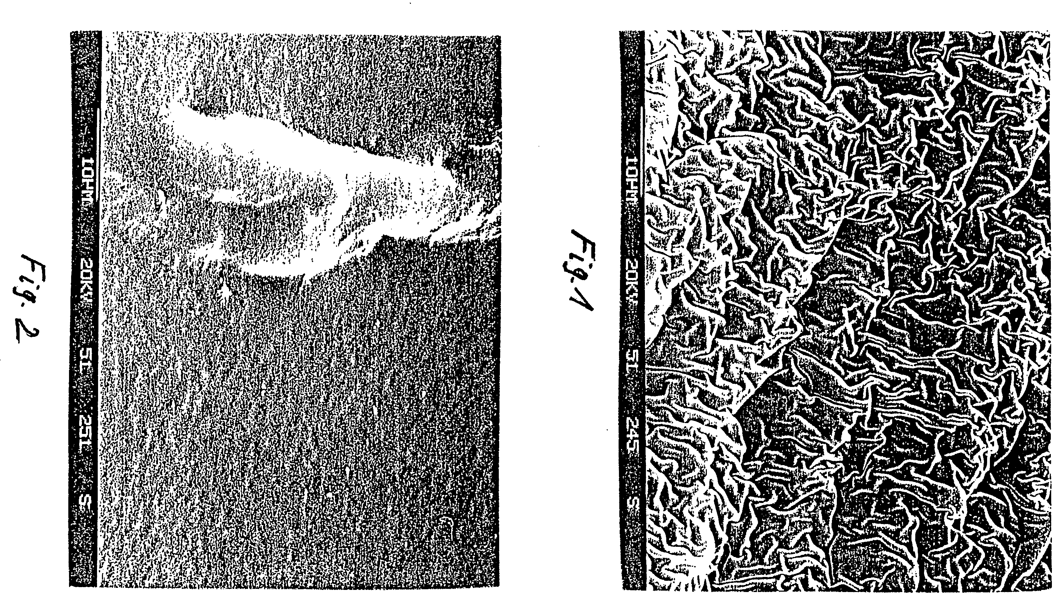

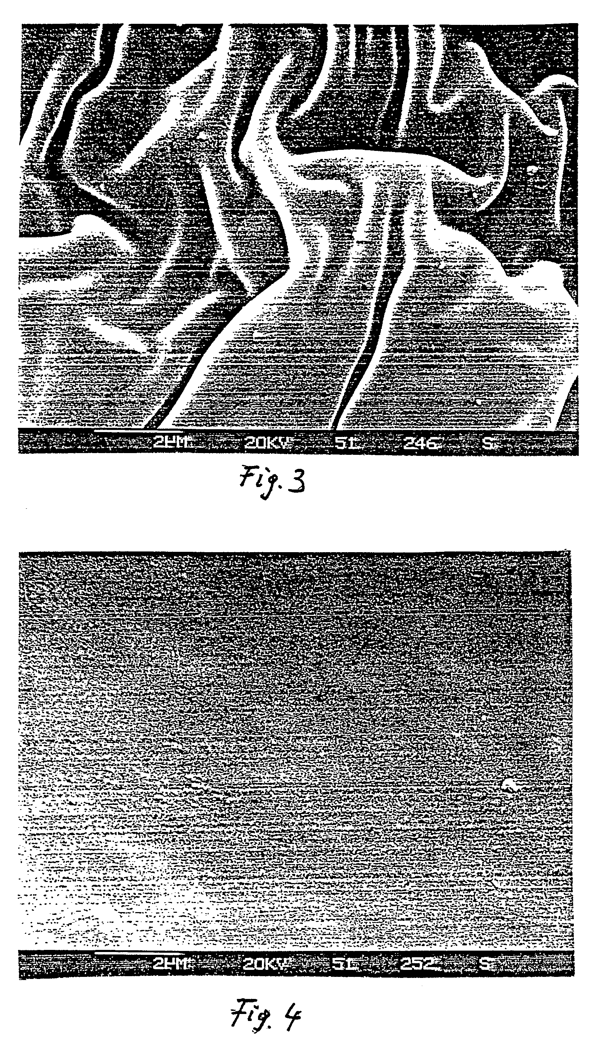

Auffallend ist eine drastische Verminderung der spezifischen Oberfläche der Proben gemäß Fig.2 und 4. Die Erfinder führen dies auf einen gleichzeitig neben der Fluorierung ablaufenden Ätzangriff des Sauerstoffs zurück. Trotz einer geringeren Fluorbelegung zeigen Hohlkörper, die nach dem erfindungsgemäßen Verfahren behandelt werden, ein deutlich verbessertes Permeationsverhalten.

Dagegen führen zu hohe Sauerstoffkonzentrationen (5 Vol.%) im Temperaturbereich von 120 bis 140° C zu einem hohen oxidativen Ätzabtrag der fluorierten Grenzschicht. Der Fluorgehalt und als Folge davon auch die Sperrwirkung der fluorierten Grenzschichten werden dadurch erheblich gemindert, wie der folgenden Tabelle entnommen werden kann. Diese zeigt Permeationsergebnisse fluorierter Schulterflaschen aus HDPE der Bezeichnung GM 7746 der Firma Hoechst AG. Als Permeent diente Prüfkraftstoff ERFG 30 bei 40° C.

| Fluorierungsbedingungen | | | | | | |
|---|---|---|---|---|---|---|
| | Temp. (°C) | Zeit (s) | F₂-Konz. (Vol.%) | O₂-Konz. (Vol.%) | P (bar) | |
| Probe 1 | 100 | 20 | 1,0 | - | 9 | |
| Probe 2 | 120 | 20 | 1,0 | - | 9 | |
| Probe 3 | 130 | 20 | 1,0 | - | 9 | |
| Probe 4 | 140 | 20 | 1,0 | - | 9 | |
| Probe 5 | 100 | 20 | 1,0 | 0,2 | 9 | |
| Probe 6 | 120 | 20 | 1,0 | 0,2 | 9 | |
| Probe 7 | 140 | 20 | 1,0 | 0,2 | 9 | |
| Probe 8 | 120 | 20 | 1,0 | 5 | 9 | |
| Probe 9 | 140 | 20 | 1,0 | 5 | 9 | |
| | Permeation in Gew.% nach Tagen | | | | | F-Gehalt (μg/cm²) |
| | 1 | 4 | 7 | 14 | 21 | 28 | |
| Probe 1 | 0,00 | 0,00 | 0,08 | 0,14 | 0,30 | 0,60 | 35 |
| Probe 2 | 0,0 | 0,0 | 0,06 | 0,16 | 0,30 | 0,60 | 58 |
| Probe 3 | 0,0 | 0,0 | 0,1 | 0,23 | 0,51 | 0,79 | 59 |
| Probe 4 | 0,0 | 0,03 | 0,13 | 0,3 | 1,036 | 0,92 | 62 |
| Probe 5 | 0,0 | 0,0 | 0,08 | 0,14 | 0,2 | 0,48 | 6 |
| Probe 6 | 0,0 | 0,0 | 0,05 | 0,1 | 0,22 | 0,41 | 5 |
| Probe 7 | 0,0 | 0,04 | 0,08 | 0,2 | 0,35 | 0,6 | 6 |
| Probe 8 | 0,0 | 0,06 | 0,15 | 0,65 | 1,06 | 1,59 | 3 |
| Probe 9 | 0,2 | 1,25 | 3,6 | 7,7 | 12,2 | 16,1 | 1 |

Es ist offensichtlich, daß der Fluorgehalt des Behandlungsgases, der bei völliger Abwesenheit von Sauerstoff zur Erziehung einer optimalen Barriereschicht notwendig ist (ca. 0,5 bis 2,5 Vol%), durch den Zusatz von Sauerstoff im Bereich von 0,05 bis 5 Vol.% um ein Drittel gesenkt werden kann. Dieses bietet auch hinsichtlich der Entsorgung von überschüssigem Fluor und des Reaktionsproduktes HF erhebliche Vorteile.

**Ansprüche**

1. Verfahren zum Blasformen und Fluorieren von Hohlkörpern aus thermoplastischen Material, bei dem ein Vorformling durch Einblasen eines inerten Blasgases zur Anlage an die Innenwandung einer Blasform gebracht wird, wonach ein fluorhaltiges Reaktionsgas zur Erzeugung einer fluorierten Sperrschicht auf der Hohlkörperinnenfläche in das Innere des Hohlkörpers geleitet wird,
dadurch gekennzeichnet,
daß die Temperatur der Hohlkörperinnenfläche beim Einblasen des Reaktionsgases 50 bis 130 °C beträgt und das Reaktionsgas aus 0,1 bis 2 Vol% Fluor und 0,05 bis 5 Vol% Sauerstoff, Rest Stickstoff, besteht.

2. Verfahren nach Anspruch 1,
dadurch gekennzeichnet,
daß der Sauerstoffgehalt des Reaktionsgases 0,05 bis 1 Vol% bp trägt.

3. Verfahren nach Anspruch 1 oder 2,
dadurch gekennzeichnet,
daß die Temperatur der Hohlkörperinnenfläche beim Einblasen des Reaktionsgases 80 bis 120 °C beträgt.

MESSER GRIESHEIM GMBH

MG 1618

Fig. 1

Fig. 2

MESSER GRIESHEIM GMBH                    MG 1618

Fig. 3

Fig. 4